Europäisches Patentamt

European Patent Office

Office européen des brevets

(19)

(11) Veröffentlichungsnummer: **0 402 495 B1**

# EUROPÄISCHE PATENTSCHRIFT

(12)

(45) Veröffentlichungstag der Patentschrift: **23.12.92**

(51) Int. Cl.5: **B65G 27/32**, B65G 27/30

(21) Anmeldenummer: **89110652.8**

(22) Anmeldetag: **13.06.89**

(54) **Verfahren zum Betreiben eines magnetisch angetriebenen Schwingfördergerätes und Vorrichtung zur Durchführung des Verfahrens.**

(43) Veröffentlichungstag der Anmeldung:
**19.12.90 Patentblatt 90/51**

(45) Bekanntmachung des Hinweises auf die
Patenterteilung:
**23.12.92 Patentblatt 92/52**

(84) Benannte Vertragsstaaten:
**AT CH DE ES FR GB IT LI**

(56) Entgegenhaltungen:
**DE-A- 2 532 547**
**DE-A- 3 813 387**
**US-A- 2 984 339**
**US-A- 2 993 585**
**US-A- 3 253 701**

(73) Patentinhaber: **Licentia Patent-
Verwaltungs-GmbH
Theodor-Stern-Kai 1
W-6000 Frankfurt/Main 70(DE)**

(72) Erfinder: **Frölich, Bernhard
An den Tannen 33
W-6082 Walldorf(DE)**
Erfinder: **Mildenberger, Werner
Kirschbaumweg 12
W-6472 Altenstadt 1(DE)**
Erfinder: **Hanemann, Siegfried
Am Flachsberg 10
W-6052 Rodgau 2(DE)**

(74) Vertreter: **Lertes, Kurt, Dr. et al
Licentia Patent-Verwaltungs-GmbH Theodor-
Stern-Kai 1
W-6000 Frankfurt/M 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Betreiben eines magnetisch angetriebenen Schwingfördergeräts, das als Zweimassen-Schwingungssystem zwischen einer Freimasse und einer Arbeitsmasse einen magnetischen Antrieb aufweist, bei unterschiedlicher Fördergutbelastung und konstanter Antriebsfrequenz und auf eine Vorrichtung zur Durchführung des Verfahrens.

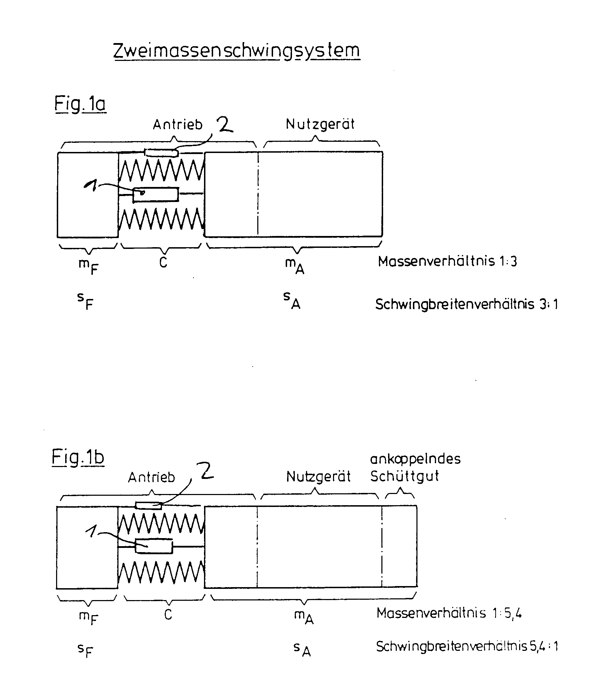

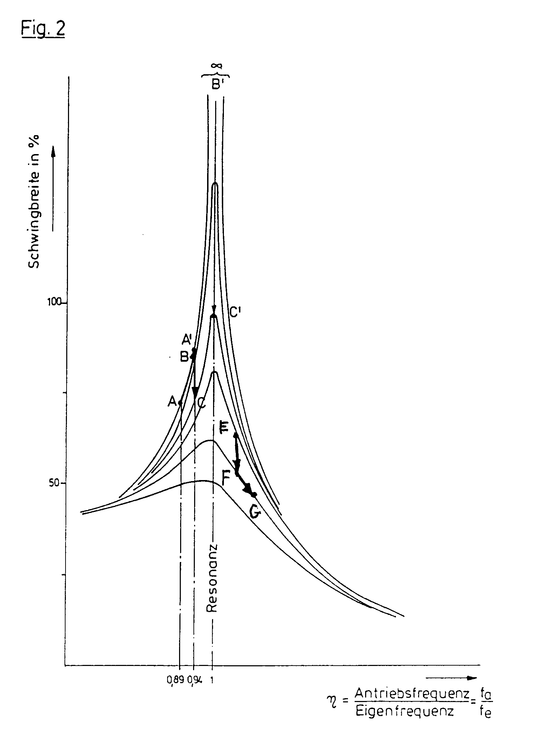

Ein derartiges Verfahren ist aus der Firmendruckschrift "Grundbegriffe der Schwingfördertechnik", AEG-Telefunken, Fachbereich Vibration,- und Schweisstechnik, bekannt. Für die nachfolgenden Betrachtungen wird auf Fig. 1 und 2 verwiesen, wobei für das Schwingfördergerät als Antrieb ein Magnetvibrator vorausgesetzt wird.

Das Schwingfördergerät hat eine Eigen- bzw. Resonanzfrequenz fe, die mit zunehmender Masse des Zweimassen-Schwingungssystems sich zu kleineren Werten verschiebt. In Abhängigkeit von der Antriebsfrequenz fa wird in bekannter Weise die Resonanzkurve durchlaufen, die um so flacher verläuft, je grösser die Dämpfung ist. In der Figur 2 ist die Amplitude in Abhängigkeit des aus der Antriebsfrequenz und der Eigenfrequenz gebildeten Quotienten dargestellt. Ein Betrieb des Schwingfördergerätes im Resonanzbereich ist hinsichtlich der Schwingungsamplitude um so kritischer bzw. labiler, je geringer die Dämpfung ist. Andererseits wird eine möglichst geringe Dämpfung angestrebt, um die Verlustleistung gering zu halten. Der Arbeitspunkt wird daher üblicherweise auf den linken oder rechten Zweig der Resonanzkurve gelegt. Die Stabilität des Betriebs ist um so größer, je größer der Resonanzabstand des Arbeitspunktes ist. Es soll zunächst der überkritische Betrieb betrachtet werden, d. h. der Fall, daß die Eigenfrequenz kleiner als die Antriebsfrequenz ist, wobei die Antriebsfrequenz als konstanter Wert angenommen wird. Durch Erhöhung der Fördergutbelastung wird die Dämpfung erhöht, und die Schwingamplitude vermindert sich um die Strecke E-F. Diese Erhöhung der Dämpfung erklärt sich durch den Umstand, daß bei vermehrtem körnigen Fördergut die Reibung der Körper untereinander in ihrer Gesamtheit vergrößert wird, was zu einer Erhöhung der Dämpfung führt. Durch eine vergrößerte Fördergutbelastung koppelt gleichzeitig eine größere Masse an, wodurch die Eigenfrequenz des Schwingfördergerätes sinkt (Strecke F-G). Dadurch wird nicht nur der Resonanzabstand erhöht, sondern es findet gleichzeitig eine weitere Verkleinerung der Schwingamplitude statt.

Beim unterkritischen Betrieb ist die Eigenfrequenz größer als die Antriebsfrequenz. Mit zunehmender Dämpfung findet auch hier eine Verringerung der Schwingungsamplitude statt. Im Unterschied zum überkritischen Betrieb jedoch führt die erhöhte Massenankopplung zu einer Erhöhung der Amplitude (Strecke A-B). Dämpfung und Massenankopplung wirken also einander entgegen, was zu einer Stabilisierung des Betriebs führt. Da im Resonanzfall die Schwingung instabil ist, wird das System so eingestellt, daß unter Berücksichtung aller Einflüsse durch die Belastung der Abstand zur Resonanz so groß ist, daß sich ein stabiler Betrieb ergibt. Ein Betrieb in Resonanz ist ohne Zusatzmaßnahmen nicht möglich. Um den Einfluß der Ankopplung und Dämpfung durch das Fördergut möglichst gering zu halten, besteht die Möglichkeit, die Massen der Arbeits- und insbesondere der Freiseite möglichst groß zu wählen. Dadurch wird auch in Resonanznähe eine gute Schwingungsstabilität erzielt. Diese Auslegung bedingt jedoch eine relativ große Masse des Magnetvibrators, die von der Handhabung her und aus Kostengründen unerwünscht ist. Das optimale Verhältnis von Arbeitsmasse zu Freimasse liegt etwa bei 3 : 1 bis 4 : 1. In diesem Fall wird das Schwingsystem überlicherweise so abgestimmt, daß sich unter maximalen Belastungseinfluß ein Resonanzabstand von mehr als ca. 5% ergibt.

Bekannt ist auch ein Schwingfördergerät, das eine Förderrinne enthält, die unter Zwischenschaltung von zwei Luftfedern auf Trägern gelagert ist. An der Förderrinne ist ein länglicher Vibrationserreger aufgehängt, der eine Welle mit exzentrisch angebrachten Massen aufweist, die motorisch angetrieben werden. Zwischen den Luftfedern sind Leitungen mit einem Ventil angeordnet, in dessen Öffnungszustand Luft zwischen den Luftfedern mit der Arbeitsfrequenz der Schwingförderrinne hin- und herströmt. Damit wird die Federkonstante der Luftfedern vermindert und das System gedämpft. Wenn das Ventil geschlossen ist, liegt die Eigenfrequenz des Systems geringfügig höher als die Antriebsfrequenz. Bei offenem Ventil wird eine zusätzliche Dämpfung hervorgerufen. Zugleich geht die Eigenfrequenz zurück (US-A-2 984 339).

Die Regelung eines elektromagnetisch erregten Zweimassen-Schwingungssystems ist in der DE-AS 11 11 270 angesprochen. Die Schwingungsamplitude, die der Endlage einer Masse entspricht, läßt sich bei einem Vibratorantrieb durch Vorschaltung von Transformatoren, Drossel oder Widerständen einstellen. Um eine vorgegebene Schwingungsamplitude auf den Sollwert einzuregeln, wird dem Vibratorantrieb ein magnetischer Verstärker vorgeschaltet, der in Abhängigkeit von der Differenz zwischen dem größten und dem kleinsten Massenabstand selbsttätig geregelt wird. In diesem Zusammenhang ist es auch noch bekannt (Chemie-Technik 14, 14. Jahrgang (1985), Nr. 12, S. 45 und 46), eine Resonanz-Vibrations-Steuerung vorzunehmen. Dazu ist eine Frequenz-Rückkopplung von dem Schwingfördergerät an den Regelkreis vorgesehen, der sich damit auf die Eigenresonanz des fördersystems synchronisiert. Um ein überschwingen der Förderamplitude zu vermeiden, ist ein weiterer Amplituden-Regelkreis zur Steuerung der Erregerenergie erforderlich. Diese Regelung garantiert zwar ein exakt proportionales Verhalten der Schwingungsamplitude zum eingestellten Wert, und zwar unabhängig von allen äußeren Einwirkungen, ist jedoch äußerst aufwendig, da kein fester Zusammenhang zwischen Antriebsfrequenz und Netzfrequenz besteht. Es ist eine Frequenzregelung notwendig.

Zusammengefaßt lassen sich für die Anforderungen an ein Schwingfördergerät, dessen Justierung und den Schwingantrieb für einen optimalen Förderbetrieb folgende Bedingungen aufstellen:

Zur Erzielung eines guten Wirkungsgrades soll möglichst in Resonanznähe gearbeitet werden, da dann bis auf die Dämpfungsverluste die volle Antriebsenergie an das Schwingfördergerät abgegeben wird. Die Freimasse sollte im Verhältnis zur Arbeitsmasse möglichst klein sein. Da ein überschwingen der Betriebsamplitude dazu führen kann, daß Kern und Anker des Vibratorantriebs im Luftspalt zusammenschlagen und ggf. zu seiner Zerstörung führen, muß das unerwünschte überschwingen verhindert werden.

Der Erfindung liegt die Aufgabe zugrunde, ein Verfahren zum Betreiben eines Schwingfördergerätes bei konstanter Antriebsfrequenz verfügbar zu machen, das ohne schädliches überschwingen einen hohen Wirkungsgrad gewährleistet, wobei der notwendige Regelaufwand möglichst klein gehalten werden soll.

Diese Aufgabe wird gemäss der Erfindung dadurch gelöst, dass die Eigenfrequenz des Schwingfördergeräts ohne Fördergutbelastung so gewählt und eingestellt wird, dass sich bei Fördergutbelastung die Eigenfrequenz unter zunehmender Dämpfung der Antriebsfrequenz nähert und bei maximaler Fördergutbelastung etwa gleich der Antriebsfrequenz ist und dass die Gesamtschwingbreite des magnetischen Antriebs auf einen vorgegebenen Wert geregelt wird.

Das Verfahren lässt sich bei guter Effektivität in einfacher Weise durchführen. Im wesentlichen ist dazu erforderlich, unter Beachtung der voraussichtlichen Fördergutbelastung die Eigenfrequenz der Schwingfördereinrichtung einzustellen, und zwar auf den linken Ast der Kurve nach der Figur 2. Das bedeutet, dass die Schwingförderrinne im Leerlauf der inneren Dämpfung unterliegt und damit ihr Schwingverhalten durch den Resonanzabstand stabiler ist als in Resonanz. Bei Belastung liegt der Arbeitspunkt durch die Massenankopplung zwar bei der Eigenfrequenz, das System ist jedoch aufgrund der inneren Reibung des Fördergutes stärker bedämpft (äussere Dämpfung), so dass bereits von daher keine zu starken überschwingungen auftreten. Durch diese Verfahrensweise ergibt sich jedenfalls sowohl für den Leerbetrieb als auch den Resonanzbetrieb eine derart hohe Dämpfung, das mit einem relativ geringen Regelaufwand der Arbeitspunkt auf den Sollwert eingeregelt werden kann.

Eine zweckmässige Ausgestaltung des Verfahrens ist im Anspruch 2 beschrieben.

Besonders günstig ist es, wenn die Schwingbreite des Schwingfördergeräts auf einen vorgegebenen Wert geregelt wird. Unter Schwingbreite ist hierbei die Differenz zwischen grösstem und kleinstem Massenabstand zu verstehen.

Die Regelung sorgt dafür, dass in allen Betriebszuständen, also auch im Resonanzfall, ein Zusammenschlagen der schwingenden Teile vermieden wird. Die Regelung arbeitet unabhängig von der eingestellten Eigenfrequenz und kann mit einfachen Mitteln durchgeführt werden. Aufgrund der Regelung ist es möglich, die Eigenfrequenz unter Berücksichtigung der bei Fördergutbelastung sich einstellenden Eigenfrequenz so abzustimmen, dass bei maximaler Fördergutbelastung die Arbeitsfrequenz der Eigenfrequenz des Schwingfördergeräts einschliesslich Fördergutbelastung ist oder sehr nahe bei der Eigenfrequenz liegt. Dies bedeutet eine wesentliche Leistungssteigerung bei vorgegebenen Antriebskomponenten. Dieses Verfahren bedeutet auch, dass das Fördergut mit möglichst geringer Energiezufuhr bewegt werden kann. Durch die Förderung einer bestimmten Fördergutlast mit minimaler Energiezufuhr ergibt sich auch eine Reduzierung der erforderlichen Leistung des Magneten und damit des Aufwands für die elektrischen Antriebskomponenten. Die Abstimmung erfolgt üblicherweise durch Abgleichung der Massenverhältnisse, z.B. durch Hinzufügen oder Abnehmen von Gewichten an der Freimasse, oder durch Abgleichen der Federkonstanten, z. B. durch Hinzufügen oder Wegnehmen von Federn. Günstig für die Regelung wirkt sich aus, dass im Resonanzfall durch die Fördergutbelastung eine relativ hohe Dämpfung entsteht. Vielfach liegen die Schwingbreiten bei starker Dämpfung unter den maximal mit einem Regler erreichbaren Schwingbreiten, so dass der Regler in einem solchen Fall nicht einzugreifen braucht. Der Regler gewährleistet aber, dass bei Änderungen der Dämpfung keine unerwünscht hohen Schwingbreiten auftreten, d. h. die Schwingbreitenregelung setzt erst nach einer Abweichung von einer vorgegebenen Schwingbreite ein.

Eine Vorrichtung zum Betreiben eines magnetisch angetriebenen Schwingfördergerätes, das als Zweimassen-Schwingsystem zwischen einer Freimasse und einer Arbeitsmasse einen magnetischen Antrieb aufweist, bei unterschiedlicher Fördergutbelastung und konstanter Antriebsfrequenz besteht erfindungsgemäss darin, dass ein Istwertgeber für die Gesamtschwingbreite zwischen den Arbeits- und Freimassen vorgesehen und mit einem Vergleicher verbunden ist, dem ein Sollwert für die Gesamtschwingbreite zugeführt wird und dem ein Regler nachgeschaltet ist, der die Energiezufuhr zu einem elektromagnetischen Antrieb über eine Abschnitts- und/oder Ausschnittssteuerung oder eine Amplitudensteuerung der angelegten Spannung beeinflusst, dass der Antrieb zwischen Frei- und Arbeitsmasse angeordnet ist und dass bei maximaler Fördergutbelastung die Eigenfrequenz gleich der Arbeitsfrequenz ist.

Das Wesen der Erfindung soll anhand eines in den Zeichnungen dargestellten Ausführungsbeispiels näher erläutert werden, aus dem sich weitere Merkmale und Vorteile ergeben.

Es zeigen

Fig. 1a und 1b        ein Zweimassenschwingsystem und

Fig. 2                      den Verlauf der Schwingbreite in Abhängigkeit von der Antriebs- bzw. Eigenfrequenz.

Bei einem Zweimassensystem (Fig. 1a) berechnet sich die Eigenfrequenz nach der Formel

$$f_e = \frac{1}{2 \cdot \pi} \sqrt{\frac{c}{m_R}}$$

wobei

$$m_R = \frac{m_F \cdot (m_A + m_{Ga})}{m_F + m_A + m_{Ga}} \quad , \text{ wobei mit } m_R$$

die resultierende Masse, mit $m_F$ die Freimasse und mit $m_A$ die Arbeitsmasse und mit $m_{Ga}$ die ankoppelnde Schüttgutmasse bezeichnet sind. Daraus ist ersichtlich, wie sich unter Schüttguteinfluß die Eigenfrequenz verschiebt. So hat beispielsweise bei $m_F$ = 10 kg, $m_A$ = 30 kg und einer Federkonstanten C von 94650 N/m das Schwingsystem im Leerzustand eine Eigenfrequenz von 56 Hz.

Betrachtet man das Schwingsystem unter Schüttgutbeladung, treten 2 Effekte auf, die einander entgegenwirken; so wird nur ein Teil der Schuttgutmasse als ankoppelnde Masse auf der Arbeitsseite wirksam und geht damit in die Berechnung der Eigenfrequenz ein (Fig. 1b). Dies bewirkt eine Erhöhung der Masse der Arbeitsseite $m_A$ und damit eine Reduzierung der Eigenfrequenz.

Bei einer Schüttgutbeladung vor 120 kg und einer ankoppelnden Masse von 20 % sinkt diese Eigenfrequenz auf 52,8 Hz. Der Einfluß von Eigenfrequenzreduzierung und Dämpfung auf die Schwingbreite ist aus Fig. 2 ersichtlich (Pkt. A, B, C).

Beträgt bei konstantem Massenverhältnis $m_A$ : $m_F$ und gleicher Federkonstanten C die Eigenfrequenz 53 Hz, befindet sich das System ohne Schüttgutdämpfung (D = 0) im Zustand A' (Fig. 2). Durch die Eigendämpfung des Systems bleibt die Schwingamplitude relativ konstant bzw. läßt sich die Amplitude mit einer einfachen Regelung konstant halten. Dies wäre nicht der Fall, wenn sich das System in Resonanz befände ($f_a$ = $f_e$). Für diesen instabilen Betrieb (Pkt. B') ist ein schnellerer und aufwendigerer Reglertyp erforderlich.

Beträgt in dem obengenannten Beispiel die Schüttgutbeladung 120 kg, so erhöht sich bei einer Ankopplung von 20 % die Masse der Arbeitsseite um 24 kg. Dadurch ergibt sich eine Eigenfrequenz von 50 Hz. Das Schwingsystem befände sich also in Resonanz. Infolge der Schüttgutdämpfung wird der Pkt. B' (Fig. 2) jedoch nicht erreicht. Es stellt sich ein Punkt C' auf einer der darunterliegenden Dämpfungskurven ein. Dadurch werden ähnliche Amplituden wie im Leerzustand erreicht. Die Regelung kann relativ einfach ausgeführt werden, da die Schüttgutdämpfung dem Schwingsystem kontinuierlich Energie entzieht. Die Vorteile des beschriebenen Betriebs liegen darin, daß das Schwingsystem unter maximaler Beladung im optimalen Betriebspunkt (Resonanz) und damit in seinem maximalen Wirkungsgrad arbeitet und dies durch die Dämpfung des Schüttguts mit einer relativ einfachen Regelung erreicht wird. Deutlich erkennbar ist dies aus dem Vergleich der erreichbaren Nutzschwingbreiten bei gleichen Massenverhältnissen, wie in Fig. 2 ersichtlich. Bei vorgegebener Arbeitsmasse, ankoppelnder Masse und Antriebsfrequenz läßt sich umgekehrt auch die im Leerzustand einzustellende Eigenfrequenz $f_e$ anhand der oben angegebenen Formel bestimmen.

Bei 50Hz Antriebsfrequenz und einem $m_A$ von 30 kg einer ankoppelnden Masse.von 24 kg und einer Federkonstanten von C = 94650 N/m muß gemäß obiger Formel die Freiseite eine Masse von 11,4 kg haben um eine Eigenfrequenz von 50 Hz zu erreichen. Daraus berechnet sich mit der obigen Formel für

$m_{Ga}$ = 0, das heißt ohne Fördergut die im Leerzustand einzustellende Eigenfrequenz von 53 Hz. Oft ist es wünschenswert, als Antriebsfrequenz die Netzfrequenz oder ein ganzzahliges Vielfaches oder einen echten Bruchteil der Netzfrequenz zu verwenden, da Vielfache oder echte Bruchteile auf einfache Weise aus der Netzfrequenz gewonnen werden können.

Aufgabe der Regelung ist es, die Gesamtschwingbreite des Zweimassensystems konstant zu halten und damit auch ein Zusammenschlagen der beiden Massen zu verhindern. Als Regelgröße läßt sich der relative Weg der beiden Massen zueinander oder alle anderen davon abhängigen Größen verwenden. Dazu zählen u. a. Schwingweg, Schwinggeschwindigkeit, Federkräfte.

Da die Nutzschwingbreite nicht nur von der Gesamtschwingbreite abhängig ist, sondern auch von anderen Faktoren, wie z. B. dem Massenverhältnis $m_F$ : $m_A$, kann es sinnvoll sein, der Gesamtschwingbreitenregelung noch eine Nutzschwingbreitenregelung zu überlagern. Unter Nutzgeschwingbreite ist diejenige Schwingbreite zu verstehen, die auf eine erste feste Stelle bezogen ist, das heißt die für das Fördergut bestimmende Schwingbreite.

Es ist auch möglich, in der Regelung eine Nichtlinearität insofern vorzusehen, als erst aber einer gewissen Schwingbreite geregelt oder begrenzt wird. Im Resonanzfall bei starker Dämpfung kann dann die Regelung nicht wirksam sein, wenn die Schwingbreite kleiner als die vorgegebene Sollschwingbreite ist. Die Istschwingbreite wird zum Beispiel durch eine Schwingbreitendiskrimination oder durch einen Schalter auf die Überschreitung eines vorgegebenen Schwellenwerts überwacht, ab dem die Regelung wirksam wird.

Zwischen Freimasse $m_F$ und Arbeitsmasse $m_A$ ist ein elektromagnetischer Antrieb 1 angeordnet. Weiterhin it ein Istwertgeber 2 vorgesehen, der die Gesamtschwingbreite zwischen Freimasse $m_F$ und Arbeitsmasse $m_A$ erfaßt. Antrieb 1 und Istwertgeber 2 sind nur symbolisch in Figuren 1a und 1b dargestellt. Der Istwertgeber 2 ist im Rahmen eines Regelkreises mit einem Vergleicher verbunden, der nicht näher dargestellt wird und dem ein Sollwert für die Gesamtschwingbreite zugeführt wird. Hieraus bestimmt der Vergleicher die Regelabweichung die in einem nicht dargestellten Regler die Steuerung der Energiezufuhr zum Antrieb beeinflußt.

Die Leistungszufuhr und damit die Schwingbreite sind zweckmäßigerweise über ein Phasenanschnitts- oder Phasenabschnittsverfahren geregelt. Es ist auch möglich, über einen Transistor die Amplitude der dem Schwingantrieb zugeführten Spannung zu regeln. Ebenso ist eine Pulsbreitenmodulation der angelegten Spannung möglich. Die Regelung wird unabhängig von der Antriebsfrequenz durchgeführt. Daher reicht ein konstruktiv einfacher Regler aus. Durch den Betrieb in oder nahe an der Eigenfrequenz bei maximaler Fördergutbelastung lässt sich ein optimales Leistungs- Förderverhältnis erzielen. Der Regler sorgt dafür, dass im Resonanzfall keine Schäden durch zu hohe Schwingbreiten auftreten. Der Regler kann insbesondere eine längere Ansprechzeit haben, d. h. eine Ansprechzeit, die länger als die Periode bei Resonanz ist. Dies ergibt sich daraus, dass die Schwingungsamplituden bei Resonanz wegen der stärkeren Dämpfung nur langsam ansteigen. Der Regler muss also nicht sofort, d. h. innerhalb einer Periode der Resonanz, auf Schwingungen reagieren. Der Regler kann somit auch verzögert reagieren.

**Patentansprüche**

1. Verfahren zum Betreiben eines Schwingfördergeräts, das als Zweimassen-Schwingungssystem zwischen einer Freimasse ($m_F$) und einer Arbeitsmasse ($m_A$) einen Magnetantrieb (1) aufweist, bei unterschiedlicher Fördergutbelastung und konstanter Antriebsfrequenz (fa),
   **dadurch gekennzeichnet,**
   dass die Eigenfrequenz (fe) des Schwingfördergeräts ohne Fördergutbelastung so gewählt und eingestellt wird, dass sich bei Fördergutbelastung die Eigenfrequenz der Antriebsfrequenz (fa) unter zunehmender Dämpfung nähert und bei maximaler Fördergutbelastung etwa gleich der Antriebsfrequenz (fa) ist und dass die Schwingbreite des Magnetantriebs (1) auf einen vorgegebenen Wert geregelt wird.

2. Verfahren nach Anspruch 1,
   **dadurch gekennzeichnet,**
   dass bei einem Massenverhältnis zwischen Arbeitsmasse ($m_A$) und Freimasse ($m_F$) von etwa 3 : 1 die Eigenfrequenz (fe) ohne Fördergutbelastung auf einen Wert eingestellt wird, der etwa 5 % oberhalb der Antriebsfrequenz (fa) liegt.

3. Verfahren nach Anspruch 1 oder 2,
   **dadurch gekennzeichnet,**
   dass die Nutzschwingbreite des Schwingfördergeräts durch eine überlagerte Regelung auf einen vorgegebenen Wert geregelt wird.

4. Verfahren nach einem oder mehreren der Ansprüche 1 bis 3,
   **dadurch gekennzeichnet,**
   dass die Gesamt-Schwingbreite des Magnetantriebs (1) ab einer vorgegebenen Schwingbreite geregelt wird.

5. Verfahren nach Anspruch 1 oder einem der vorhergehenden Ansprüche,
   **dadurch gekennzeichnet,**
   dass ein für die Gesamtschwingbreite verwendeter Regler nur den Energiezufluss zu einem Stellglied regelt und eine Ansprechzeit hat, die grösser als die Periode bei Resonanz ist.

6. Verfahren nach einem oder mehreren der Ansprüche 1 bis 4,
   **dadurch gekennzeichnet,**
   dass die Eigenfrequenz (fe) des Schwingfördergeräts im Leerzustand des Schwingfördergeräts derart eingestellt wird, dass die bei maximaler Fördergutbelastung sich ergebende Eigenfrequenz (fe) gleich der Antriebsfrequenz (fa) ist.

7. Verfahren nach Anspruch 6,
   **dadurch gekennzeichnet,**
   dass die Eigenfrequenz (fe) im Leerzustand des Schwingfördergeräts durch Anpassung der Freimasse ($m_F$) eingestellt wird.

8. Vorrichtung zum Betreiben eines Schwingfördergeräts, das als Zweimassen-Schwingungssystem zwischen einer Freimasse ($m_F$) und einer Arbeitsmasse ($m_A$) einen Magnetantrieb (1) aufweist, bei unterschiedlicher Fördergutbelastung und konstanter Antriebsfrequenz (fa),
   **dadurch gekennzeichnet,**
   dass ein Istwertgeber für die Gesamtschwingbreite zwischen der Arbeits- und der Freimasse ($m_A$; $m_F$) vorgesehen und mit einem Vergleicher verbunden ist, dem ein Sollwert für die Gesamtschwingbreite zugeführt wird und dem ein Regler nachgeschaltet ist, der die Energiezufuhr zu einem elektromagnetischen Antrieb über eine Abschnitts- und/oder Ausschnittssteuerung oder eine Amplitudensteuerung der angelegten Spannung beeinflusst, dass der Antrieb zwischen Frei- und Arbeitsmasse ($m_F$; $m_A$) angeordnet ist und dass die Freimasse ($m_F$) und/oder die Federkonstante zwischen Arbeitsmasse ($m_A$) und Freimasse ($m_F$) so abgestimmt sind dass bei maximaler Fördergutbelastung die Eingefrequenz (fe) gleich der Antriesfrequenz (fa) ist.

**Claims**

1. Method for the operation of a vibratory conveyor, which has as a two mass vibratory system a magnet drive (1) between a free mass ($m_F$) and a working mass ($m_A$), with different conveying stock loading and constant drive frequency (fa), characterised thereby that the natural frequency (fe) of the vibratory conveyor without conveying stock loading is so selected and set that with conveying stock loading the natural frequency approximates the drive frequency (fa) under increasing damping and with maximum conveying stock loading is about equal to the drive frequency (fa), and that the vibration range of the magnet drive (1) is regulated to a predetermined value.

2. Method according to claim 1, characterised thereby that with a mass ratio between working mass ($m_A$) and free mass ($m_F$) of about 3:1, the natural frequency (fe) without conveying stock loading is set to a value which lies about 5% above the drive frequency (fa).

3. Method according to claim 1 or 2, characterised thereby that the effective vibration range of the vibratory conveyor is regulated to a predetermined value by a superimposed regulation.

4. Method according to one or more of claims 1 to 3, characterised thereby that the full vibration range of the magnet drive (1) is regulated down to a predetermined vibration range.

5. Method according to claim 1 or one of the preceding claims, characterised thereby that a regulator used for the full vibration range regulates only the energy flow to a setting element and has a response

6

time which is greater than the period with resonance.

6. Method according to one or several of claims 1 to 4, characterised thereby that the natural frequency (fe) of the vibratory conveyor in the empty state of the vibratory conveyor is set in such a manner that with maximum conveying stock loading the resulting natural frequency (fe) is equal to the drive frequency (fa).

7. Method according to claim 6, characterised thereby that the natural frequency (fe) in the empty state of the vibratory conveyor is set by adaptation of the free mass ($m_F$).

8. Device for the operation of a vibratory conveyor, which has as a two mass vibratory system a magnet drive (1) between a free mass ($m_F$) and a working mass ($m_A$), with different conveying stock loading and constant drive frequency (fa), characterised thereby that an actual value transmitter is provided for the full vibration range between the working and the free mass ($m_A$; $m_F$) and is connected with a comparator, to which a target value for the full vibration range is fed and downstream of which is connected a regulator, which influences the energy supply to an electromagnetic drive by way of a sector and/or cut-out control or an amplitude control of the applied voltage, that the drive is arranged between the free and working mass ($m_F$; $m_A$) and that the free mass ($m_F$) and/or the force constant between the working mass ($m_A$) and free mass ($m_F$) are so adjusted that with maximum conveying stock loading the natural frequency (fe) is equal to the drive frequency (fa).

**Revendications**

1. Procédé de mise en oeuvre d'un convoyeur oscillant, qui en tant que système oscillant à deux masses comporte un entraînement magnétique (1) entre une masse libre (mF) et une masse de travail (mA), avec une charge de produits à transporter variable et une fréquence d'entraînement (fa) constante, caractérisé en ce que la fréquence de résonance (fe) du convoyeur oscillant sans charge de produits à transporter est choisie et réglée de telle sorte que sous charge de produits à transporter, la fréquence de résonance avoisine la fréquence d'entraînement (fa) avec amortissement croissant et que sous charge maximale elle soit à peu près égale à la fréquence d'entraînement (fa) et en ce que la largeur d'oscillation de l'entraînement magnétique (1) est réglée sur une valeur donnée.

2. Procédé selon la revendication 1, caractérisé en ce que dans le cas d'un rapport entre la masse de travail (mA) et la masse libre (mF) d'environ 3 à 1, la fréquence de résonance (fe) sans charge est réglée sur une valeur qui se situe à environ 5 % au-dessus de la fréquence d'entraînement (fa).

3. Procédé selon la revendication 1 ou 2, caractérisé en ce que la largeur d'oscillation utile du convoyeur oscillant est réglée sur une valeur donnée, par un réglage d'asservissement.

4. Procédé selon une ou plusieurs des revendications 1 à 3, caractérisé en ce que la largeur totale d'oscillation de l'entraînement magnétique (1) est réglée à partir d'une largeur d'oscillation donnée.

5. Procédé selon la revendication 1 ou l'une des revendications précédentes, caractérisé en ce qu'un régulateur, utilisé pour toute la largeur d'oscillation, ne règle que l'arrivée d'énergie à un organe de réglage et présente un temps de réponse supérieur à la période en résonance.

6. Procédé selon une ou plusieurs des revendications 1 à 4, caractérisé en ce que la fréquence de résonance (fe) du convoyeur oscillant à vide est réglée de telle sorte que la fréquence de résonance (fe), résultant sous charge maximale, est égale à la fréquence d'entraînement (fa).

7. Procédé selon la revendication 6, caractérisé en ce que la fréquence propre (fe) du convoyeur oscillant à vide est réglée par adaptation de la masse libre (mF).

8. Dispositif de mise en oeuvre d'un convoyeur oscillant, qui en tant que système oscillant à deux masses comporte un entraînement magnétique (1) entre une masse libre (mF) et une masse de travail (mA), avec une charge de produits à transporter variable et une fréquence d'entraînement (fa) constante, caractérisé en ce qu'il est prévu un capteur de valeur réelle pour la largeur totale d'oscillation entre la masse de travail (mA) et la masse libre (mF), qui est relié à un comparateur auquel est envoyée une valeur de consigne pour la largeur totale d'oscillation et en aval duquel est monté un régulateur qui agit sur l'arrivée d'énergie à un entraînement électromagnétique, par une commande de coupe et/ou de découpe ou une commande d'amplitude de la tension appliquée, en ce que l'entraînement est placé entre la masse libre (mF) et la masse de travail (mA) et en ce que la masse libre (mF) et/ou la constante de ressort entre la masse de travail (mA) et la masse libre (mF) sont accordées de manière que sous charge maximale la fréquence de résonance (fe) soit égale à la fréquence d'entraînement (fa).

## Zweimassenschwingsystem

### Fig. 1a

Antrieb  2      Nutzgerät

$m_F$    C        $m_A$        Massenverhältnis 1:3

$s_F$            $s_A$        Schwingbreitenverhältnis 3:1

### Fig. 1b

Antrieb  2      Nutzgerät    ankoppelndes
                             Schüttgut

$m_F$    C        $m_A$        Massenverhältnis 1:5,4

$s_F$            $s_A$        Schwingbreitenverhältnis 5,4:1

Fig. 2

$$\eta = \frac{\text{Antriebsfrequenz}}{\text{Eigenfrequenz}} = \frac{f_a}{f_e}$$